# EUROPÄISCHE PATENTSCHRIFT

(11) **EP 4 290 099 B1**
(45) Veröffentlichungstag und Bekanntmachung des Hinweises auf die Patenterteilung: **15.10.2025**
(21) Anmeldenummer: 23173557.2
(22) Anmeldetag: 16.05.2023
(51) Int. Cl.: F16H 61/04, F16H 63/50, F16H 61/4008

(54) **NUTZFAHRZEUG**
UTILITY VEHICLE
VÉHICULE UTILITAIRE

(30) Priorität: 08.06.2022 DE 102022114409
(43) Veröffentlichungstag der Anmeldung: 13.12.2023
(73) Patentinhaber: Wacker Neuson Linz GmbH, 4063 Hörsching (AT)
(72) Erfinder: FARTHOFER, Dieter, 4052 Ansfelden (AT)
(74) Vertreter: Müller Hoffmann & Partner

(56) Entgegenhaltungen:
- DE-A1- 102005 043 700
- DE-A1- 102008 054 635
- DE-A1- 102017 206 375

## Beschreibung

Die Erfindung betrifft Nutzfahrzeuge, z.B. Mobilbaggern, Radladern, Telehandlern, Dumpern etc.

Derartige Nutzfahrzeuge werden häufig elektrisch oder hydrostatisch angetrieben. Die Getriebe sind dabei derart ausgelegt, dass sie nicht während der Fahrt, sondern nur im Stand geschaltet werden können. Insbesondere kann ein Gangwechsel zwischen Gängen mit unterschiedlichen Übersetzungen nur im Stand erfolgen. Die Getriebe weisen häufig keinen eigenen Rückwärtsgang, sondern lediglich zwei oder mehr Schaltstufen auf. Eine Vorwärts- bzw. Rückwärtsfahrt des Nutzfahrzeugs kann dann in der Regel durch eine Drehrichtungsumkehr des Antriebsmotors erreicht werden.

Ein typisches mechanisches Getriebe für ein Nutzfahrzeug weist zwei Übersetzungsstufen mit jeweils einer Paarung von miteinander kämmenden Zahnrädern auf. An einer Welle, die zwei Zahnräder, also jeweils ein Zahnrad aus einer Übersetzungspaarung, trägt, ist eine Schaltvorrichtung vorgesehen, mit der der Drehmomentfluss von der Welle zu jeweils einem der beiden Zahnräder und damit einer der beiden Zahnradpaarungen (Schaltstufen) geführt werden kann.

Die beiden Zahnräder weisen jeweils seitlich einen Kupplungskörper mit einer Verzahnung am Umfang auf, über die eine Schaltmuffe mit einer entsprechend passenden Gegenverzahnung aufgeschoben werden kann.

Zum Herstellen des Kraft- bzw. Drehmomentflusses kann die Schaltmuffe auf der Welle axial verschoben werden, z.B. in drei verschiedene Stellungen. In einer Mittelstellung ist die Schaltmuffe von den Kupplungskörpern der beiden Zahnräder und damit der beiden Übersetzungsstufen getrennt, so dass ein Leerlauf möglich ist. Aus der Leerlaufstellung kann die Schaltmuffe axial entweder auf den einen oder auf den anderen Kupplungskörper verschoben werden, um eine formschlüssige Kopplung zwischen dem betreffenden Zahnrad einerseits und der Welle, auf der die Schaltmuffe verschiebbar ist, andererseits, herzustellen.

Die Zähne an der Schaltmuffe und die Zähne am Kupplungskörper des betreffenden Zahnrads weisen häufig an ihren axialen Stirnseiten Schrägen auf, um ein Ineinandergleiten der Zähne während eines Schaltvorgangs zu ermöglichen.

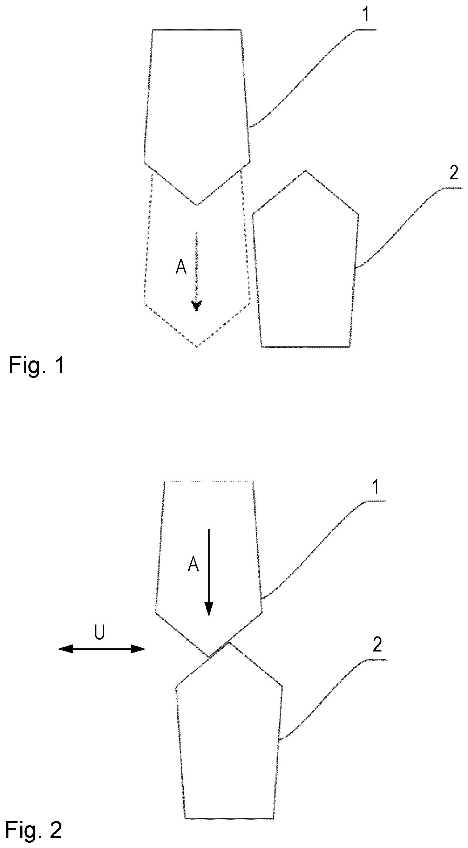

Fig. 1 zeigt schematisch einen derartigen Schaltvorgang unter optimalen Bedingungen.

Dabei wird ausschnittsweise ein Zahn einer Schaltmuffe 1 in Relation zu einem Zahn eines Kupplungskörpers 2 dargestellt. An der Schaltmuffe 1 sind am Umfang mehrere Zähne in der gezeigten Weise nebeneinander angeordnet und jeweils mit Zwischenräumen voneinander beabstandet.

Analog dazu sind an dem Kupplungskörper 2 mehrere Zähne am Umfang mit Abstand zueinander vorgesehen. Der Kupplungskörper 2 ist einem nicht dargestellten Zahnrad zugeordnet, das wiederum Teil einer Zahnradpaarung und damit eines Ganges des Getriebes ist.

Zum Herstellen des gewünschten Formschlusses zwischen der Schaltmuffe 1 und dem Kupplungskörper 2 muss die axial auf einer nicht dargestellten Getriebewelle verschiebbare Schaltmuffe 1 mit ihren Zähnen in die Zwischenräume zwischen den Zähnen des Kupplungskörpers 2 verschoben werden können. In Fig. 1 ist die Verschieberichtung durch einen Pfeil A sowie die gewünschte Endstellung mit gestrichelter Linie dargestellt.

Fig. 2 zeigt eine Situation mit einer nicht optimalen Relativstellung der Zähne der Schaltmuffe 1 und des Kupplungskörpers 2 zueinander. Hier stehen die abgeschrägten Stirnflächen der Zähne voreinander, so dass eine Relativdrehung zwischen den Zähnen in Umfangsrichtung U erforderlich ist, um die Zähne in eine Relativstellung analog zu Fig. 1 zu bringen. Erst dann kann die Schaltmuffe 1 weiter in Richtung des Kupplungskörpers 2 bewegt werden, so dass die Zähne in die gegenseitigen Zwischenräume gleiten.

Die Schaltmuffe 1 wird dabei zwar von einer Stellkraft beaufschlagt, z.B. von einem Stellglied. Diese Stellkraft reicht jedoch insbesondere bei Nutzfahrzeug-Getrieben nicht aus, um die gewünschte Relativdrehung zwischen der Schaltmuffe 1 und dem Kupplungskörper 2 zu bewirken.

Der Umschaltvorgang erfolgt bei Nutzfahrzeug-Getrieben im Stillstand. Dazu wird in der Regel die Bremse angezogen, um ein Wegrollen des Fahrzeugs zu verhindern. Der Bediener kann mit Hilfe eines Tasters oder eines Schalters einen Schaltbefehl in Form eines elektrischen Signals an die Steuervorrichtung geben, um den Schaltvorgang einzuleiten.

Die Schaltung ist typischerweise nicht synchronisiert und der Antriebsstrang während des Schaltvorgangs nicht drehmomentfrei. Daher kann er nur im Stillstand geschaltet werden, wobei der verspannte Antriebsstrang das Umschalten aus den genannten Gründen erschwert.

Bei derartigen Nutzfahrzeugen ist der Antriebsmotor (Fahrmotor) formschlüssig mit dem Getriebe verbunden. Durch die starre Verbindung zwischen Getriebe und Antriebsmotor bewirkt jede Bewegung im Getriebe eine Bewegung auch am Antriebsmotor. Bei hydrostatischen Antrieben mit einem hydraulischen Antriebsmotor ist der Antriebsmotor mit Hilfe von Hydraulikschläuchen mit einer Fahrpumpe (Hydraulikpumpe) verbunden, die aber im Stillstand, wenn der Schaltvorgang durchgeführt wird, in einer Null-Stellung steht. Dadurch kann die Fahrpumpe bei einer Bewegung des Antriebsmotors kein Öl aufnehmen und blockiert auf diese Weise den Antriebsmotor. Der Motor kann sich somit nicht drehen, so dass letztlich auch die erforderliche Relativdrehung der Schaltmuffe 1 relativ zum Kupplungskörper 2 des betreffenden Zahnrads blockiert wird. Ein Umschalten des Ganges ist in dieser Situation nicht oder nur erschwert möglich. Der Schaltvorgang bleibt erfolglos und kann erst durch ein erneutes Starten des Nutzfahrzeugs und Verfahren des Fahrzeugs um ein gewisses Stück behoben werden, indem danach erneut ein Umschaltvorgang versucht wird. Mit etwas Glück lässt sich das Getriebe dann schalten. Ansonsten muss der Fahrer mehrmals durch Starten des Antriebsmotors und Verfahren des Fahrzeugs versuchen, eine günstigere Stellung der Zähne im Betrieb zu erreichen.

Aus der DE 10 2008 054 635 A1, auf welcher die zweiteilige Anspruchsfassung basiert, ist ein Verfahren zum Betreiben einer elektrischen Maschine eines Antriebsstrangs mit einem formschlüssigen Schaltelement bekannt, das zwei Schaltelementhälften aufweist. Die elektrische Maschine kann die Schaltelementhälften gegeneinander in beide Drehrichtungen verdrehen.

In der DE 10 2005 043 700 A1 wird ein Schaltklauengetriebe und ein Schaltverfahren beschrieben. Dabei ist eine Vorgelegewelle des Getriebes mittels eines Elektromotors verdrehbar.

Aus der DE 10 2017 206 375 A1 ist eine Getriebeanordnung für einen Fahrantrieb bekannt, bei dem ein hydrostatisches Getriebe und ein Schaltgetriebe in Reihe gekoppelt vorgesehen sind.

Der Erfindung liegt die Aufgabe zugrunde, ein Nutzfahrzeug anzugeben, bei dem die Erfolgsquote für Schaltvorgänge im Stillstand erheblich verbessert werden und nahezu 100% erreichen kann.

Die Aufgabe wird erfindungsgemäß durch ein Nutzfahrzeug mit den Merkmalen von Anspruch 1 gelöst. Vorteilhafte Ausgestaltungen sind in den abhängigen Ansprüchen angegeben.

Es wird ein Nutzfahrzeug angegeben, mit einem mechanischen Getriebe mit wenigstens zwei Gangstufen; einem Antriebsmotor, der mit dem Getriebe zum Übertragen eines Drehmoments von dem Antriebsmotor zu dem Getriebe gekoppelt ist; einer axial verschiebbaren Schaltmuffe zum Umschalten der Gänge zwischen zwei Gangstufen; einer Stellvorrichtung zum Erzeugen einer auf die Schaltmuffe wirkenden Stellkraft zum axialen Verschieben der Schaltmuffe und damit Umschalten der Gänge; und mit einer Steuervorrichtung zum Aktivieren der Stellvorrichtung und damit Erzeugen der Stellkraft auf die Schaltmuffe und parallel dazu zum Ansteuern des Antriebsmotors, derart, dass der Antriebsmotor seine Drehrichtung wenigstens einmal ändert, während die Stellkraft auf die Schaltmuffe wirkt.

Als Stellvorrichtung kann z.B. ein elektrisches, pneumatisches oder hydraulisches Stellglied bzw. ein Stellaktor eingesetzt werden, um die Schaltmuffe axial wenigstens zwischen den zwei Gangstufen zu verschieben und dadurch jeweils einen Kraft- bzw. Drehmomentfluss zwischen einer Gangstufe und einer die Schaltmuffe tragenden Welle herzustellen.

Die Stellvorrichtung erzeugt die Stellkraft zum Verschieben der Schaltmuffe. Wenn sich die Zähne der Schaltmuffe und die Zähne des betreffenden Ganges (Kupplungskörper des zugehörigen Zahnrads) in optimaler Relativstellung zueinander befinden, können die Zähne ineinander in die Zwischenräume gleiten, um ohne Weiteres den gewünschten Formschluss herzustellen, damit das Drehmoment übertragen werden kann (vgl. obige Erläuterungen zu Fig. 1).

Wenn jedoch die Zähne der Schaltmuffe und die Zähne des zugehörigen Gangs kollidieren, also nicht gegenseitig in die Zwischenräume gleiten können, findet die oben anhand von Fig. 2 erläuterte Blockade statt. In diesem Fall wird der Antriebsmotor automatisch aktiviert und in seiner Drehrichtung wenigstens einmal geändert, während die Stellkraft weiterhin auf die Schaltmuffe wirkt.

Das Ansteuern der Stellvorrichtung und das Umschalten der Drehrichtung des Antriebsmotors durch die Steuervorrichtung kann in Form einer Assistenzfunktion realisiert werden, die automatisch bei jedem Gangwechsel durchgeführt wird, ohne dass sie vom Bediener separat aktiviert werden muss. Der Bediener muss lediglich im Stillstand seinen Gangwechselwunsch eingeben. Die eigentliche Umschaltung, einschließlich der ein- oder mehrfachen Drehrichtungsumkehr des Antriebsmotors wird durch die Assistenzfunktion verwirklicht.

Die Schaltmuffe kann eine Verzahnung aufweisen, wobei die durch die Schaltmuffe schaltbaren bzw. der Schaltmuffe zugeordneten Gangstufen jeweils eine der Verzahnung der Schaltmuffe entsprechende Verzahnung aufweisen, und wobei die Schaltmuffe in eine Schaltstellung mit einer Gangstufe verschiebbar ist, in der die Verzahnung der Schaltmuffe und die Verzahnung der betreffenden Gangstufe ineinandergreifen und dadurch eine formschlüssige Verbindung bilden, über die ein Drehmomentfluss zwischen der Gangstufe und der Schaltmuffe ermöglicht wird.

Es kann eine Bedieneinrichtung vorgesehen sein, zum Eingeben eines Schaltbefehls durch einen Bediener, wenn der Bediener ein Umschalten einer Gangstufe wünscht, wobei bei Vorliegen des Schaltbefehls durch die Steuervorrichtung die Stellvorrichtung aktiviert und die Drehrichtungsänderung des Antriebsmotors bewirkt werden kann. Der Bediener löst somit durch Eingabe des Schaltbefehls den Schaltvorgang aus. Die Steuervorrichtung kann daraufhin die Stellvorrichtung aktivieren und die Drehrichtungsänderung vornehmen. Die Drehrichtungsänderung sollte wenigstens einmal erfolgen. Bei Erfolglosigkeit kann die Drehrichtungsänderung auch mehrfach erfolgen, so dass quasi eine Drehrichtungspulsation realisiert wird, indem die Drehrichtung in kurzer Zeit häufiger geändert wird.

Es kann eine Gangwechselüberwachungseinrichtung vorgesehen sein, zum Überwachen eines erfolgreichen Gangwechsels und Erzeugen eines Kontrollsignals, wenn ein erfolgreicher Gangwechsel festgestellt wurde. Dabei kann bei Vorliegen des Schaltbefehls durch die Steuervorrichtung zunächst nur die Stellvorrichtung aktiviert werden, nicht aber die Drehrichtungsänderung bewirkt werden, wobei die Drehrichtungsänderung des Antriebsmotors erst dann bewirkt werden kann, wenn nach Ablauf einer vorgegebenen Zeitspanne nach Aktivieren der Stellvorrichtung kein Kontrollsignal vorliegt. Das bedeutet, dass nach Eingabe des Schaltbefehls durch den Bediener zunächst versucht wird, den Gang ohne weitere Maßnahmen umzuschalten, indem lediglich die Stellkraft auf die Schaltmuffe angelegt wird. Wenn sich die Zähne der Schaltmuffe und die Zähne des zugehörigen Gangs bzw. dessen Kupplungskörpers in optimaler Stellung zueinander befinden, kann bereits dann der Gang umgeschaltet werden, ohne dass weitere Maßnahmen erforderlich sind.

Wenn jedoch der Gangwechsel nach Ablauf einer gewissen Zeitdauer nicht erfolgreich abgeschlossen werden konnte, kann das Kontrollsignal nicht erzeugt werden. In diesem Fall kann die Steuervorrichtung damit beginnen, mit der einmaligen oder mehrfachen Änderung der Drehrichtung den Gangwechsel zu unterstützen. Dabei liegt weiterhin die Stellkraft an der Schaltmuffe an, so dass schließlich die Zähne der Schaltmuffe in die Zwischenräume zwischen den Zähnen des Kupplungskörpers gleiten können.

Während eines Fahrbetriebs kann durch den Antriebsmotor ein Fahr-Drehmoment erzeugt werden. Während des Aktivierens der Stellvorrichtung und gegebenenfalls auch während der Drehrichtungsänderung des Antriebsmotors kann durch den Antriebsmotor ein Schalt-Drehmoment erzeugt werden, wobei das Schalt-Drehmoment kleiner ist als das Fahrdrehmoment, insbesondere sehr viel kleiner als das Fahrdrehmoment.

Das Fahr-Drehmoment liegt in einem Fahrbetriebszustand an, wenn das Nutzfahrzeug entsprechend seinem bestimmungsgemäßen Gebrauch fährt. Das Schalt-Drehmoment hingegen stellt einen oberen Grenzwert bzw. Grenzbereich dar, der während eines Schaltvorgangs nicht überschritten werden darf. Das während eines Schaltvorgangs wirkende Drehmoment wechselt, so dass das tatsächliche Drehmoment mit der Drehrichtungsänderung variiert. Ein Überschreiten des Schalt-Drehmoment-Grenzwerts soll jedoch verhindert werden, um eine Beschädigung des Getriebes und insbesondere eine Beschädigung der Verzahnung an der Schaltmuffe oder dem Kupplungskörper zu verhindern.

Die Werte für das Fahr-Drehmoment und das Schalt-Drehmoment müssen nicht exakt bzw. genau festgelegt sein. Hierbei kann es sich vielmehr um Wertebereiche handeln, die sich aber deutlich voneinander unterscheiden müssen. Insbesondere muss - wie oben schon gesagt - das Schalt-Drehmoment deutlich kleiner sein als das Fahr-Drehmoment. Insbesondere kann das Schalt-Drehmoment kleiner als 50% des Fahr-Drehmoments sein, insbesondere kleiner als 20%, insbesondere kleiner als 10%, insbesondere kleiner als 5% des Fahr-Drehmoments.

Die Drehmomentbegrenzung für den Umschaltvorgang ist wichtig, um eine Beschädigung der Verzahnung zu verhindern, die sonst durch eine zu große lokale Flächenpressung an den Zähnen bewirkt werden kann, wie oben unter Bezugnahme auf Fig. 2 bereits erläutert wurde.

Das Schalt-Drehmoment bzw. das Drehmoment während eines Umschaltvorgangs kann z.B. durch Drucksensoren überwacht werden, damit das vorgegebene Schalt-Drehmoment nicht überschritten und damit die gewünschte Drehmomentbegrenzung erreicht werden kann.

Es kann eine Drehmomentbegrenzungseinrichtung vorgesehen sein, zum Überwachen des Schalt-Drehmoments und Begrenzen des Schalt-Drehmoments. Mit Hilfe der Drehmomentbegrenzungseinrichtung kann somit sichergestellt werden, dass der Grenzwert für das Schalt-Drehmoment nicht überschritten wird, um die Beschädigung der Schaltvorrichtung bzw. des Getriebes zu vermeiden.

Der Antriebsmotor ist gemäß der vorliegenden Erfindung ein hydrostatischer Antriebsmotor, wobei schaltbare Hydraulikventile vorgesehen sind, durch die eine Drehrichtungsumkehr des Antriebsmotors bewirkbar ist, und wobei die Drehmomentbegrenzungseinrichtung eine Druckregeleinrichtung aufweisen kann, zum Regeln des an dem Antriebsmotor anliegenden Hydraulikdrucks, derart, dass das Schalt-Drehmoment einen Grenzwert nicht überschreitet.

Die Hydraulikventile erlauben es, abwechselnd Hydraulikdruck auf die beiden Anschlüsse des hydrostatischen Antriebsmotors zu geben. Dadurch kann eine wechselnde Druckpulsation am Antriebsmotor erreicht werden, die eine schnelle Drehrichtungsumkehr ermöglicht. Dabei ist jedoch eine möglichst gute Druckregelung erforderlich, um ein möglichst genaues Drehmoment für den Schaltvorgang zu erreichen. Insbesondere muss ein Überschreiten des Grenzwerts aus den genannten Gründen vermieden werden. Es kann somit ein geregeltes Ansteuern es Antriebsmotors vorgesehen sein, damit das Getriebe keinen Schaden nimmt.

Die Drehmomentbegrenzungseinrichtung kann wenigstens einen Drucksensor aufweisen, zum Überwachen eines durch Schalten der Hydraulikventile an einer Druckseite des Antriebsmotors anliegenden Hydraulikdrucks. Insbesondere kann die Drehmomentbegrenzungseinrichtung z.B. zwei Drucksensoren aufweisen, die jeweils an einem Eingang des Antriebsmotors den Hydraulikdruck überwachen. Ein typischer hydrostatischer Antriebsmotor für ein Nutzfahrzeug weist zwei Hydraulikdruckeingänge auf, die wechselseitig beaufschlagt werden können, um den Motor in beiden Drehrichtungen antreiben zu können.

Die Drucksensoren ermöglichen eine Kontrolle und damit auch Regelung des Hydraulikdrucks, damit das Schalt-Drehmoment den vorgegebenen Grenzwert nicht überschreitet.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in schematischer Darstellung einen Schaltvorgang mit optimaler Schaltposition von Schaltmuffe und Kupplungskörper;
- **Fig. 2**: einen Schaltvorgang, bei dem die Zähne von Schaltmuffe und Kupplungskörper nicht in optimaler Position stehen;
- **Fig. 3**: einen Schaltvorgang bei einem erfindungsgemäßen Nutzfahrzeug;
- **Fig. 4**: den schematischen Aufbau eines Nutzfahrzeug-Getriebes mit einem hydrostatischen Fahrantrieb; und
- **Fig. 5**: den schematischen Aufbau eines nicht zur Erfindung gehörenden Nutzfahrzeug-Getriebes mit einem elektrischen Fahrantrieb.

Anhand der Fig. 1 und 2 wurde bereits oben in Zusammenhang mit dem Stand der Technik die Problematik erläutert, die beim Schalten von Nutzfahrzeug-Getrieben im Stillstand auftreten kann, wenn die jeweiligen Verzahnungen der Schaltmuffe und des zugehörigen Gangs (Kupplungskörper) nicht in optimaler Schaltposition zueinanderstehen (Fig. 2).

Erfindungsgemäß ist vorgesehen, dass zusätzlich zu dem Beaufschlagen der Schaltmuffe mit einer Stellkraft eine Drehrichtungsänderung durch den Antriebsmotor durchgeführt wird, die eine Relativbewegung der beteiligten Zähne am Umfang ermöglicht, so dass schließlich eine optimale Schaltposition erreicht werden kann, in der die beteiligten Zähne ineinandergleiten können.

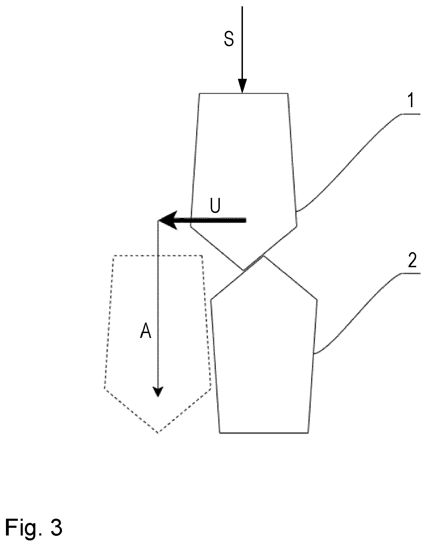

Dieser Zusammenhang wird anhand von Fig. 3 erläutert.

Dort steht ein beispielhaft dargestellter Zahn einer Schaltmuffe 1 vor einem ebenfalls beispielhaft dargestellten Zahn eines Kupplungskörpers 2. Die beiden Zähne sind jeweils beispielhaft als Teil einer sich über den Umfang erstreckenden Verzahnung der Schaltmuffe 1 bzw. des Kupplungskörpers 2 dargestellt.

Die Schaltmuffe 1 und damit auch der dargestellte Zahn wird durch eine Stellkraft S mit Hilfe einer nicht dargestellten Stellvorrichtung in Richtung des Kupplungskörpers 2 beaufschlagt. Da der Zahn der Schaltmuffe 1 vor dem Zahn des Kupplungskörpers 2 steht, kann er nicht frei in den Zwischenraum zwischen den Zähnen des Kupplungskörpers 2 gleiten. Insoweit entspricht diese Ausgangsstellung der oben erläuterten Fig. 2.

Parallel zu dem Aufbringen der Stellkraft S bzw. zeitlich etwas später beginnend (z.B. nach Ablauf einer vorgegebenen Zeitspanne), wird ein nicht dargestellter Antriebsmotor automatisch kurzzeitig betätigt, so dass eine Relativdrehung zwischen den Zähnen (Verzahnung) der Schaltmuffe 1 und den Zähnen (Verzahnung) des Kupplungskörpers 2 erfolgen kann. Insbesondere kann - wie in Fig. 3 gezeigt - der dort dargestellte Zahn der Schaltmuffe 1 in Umfangsrichtung U bewegt werden und schließlich in Axialrichtung A in den Zwischenraum neben dem Zahn des Kupplungskörpers 2 gleiten, um auf diese Weise die gewünschte formschlüssige Schaltstellung zu erreichen, die oben auch bereits anhand von Fig. 1 erläutert wurde.

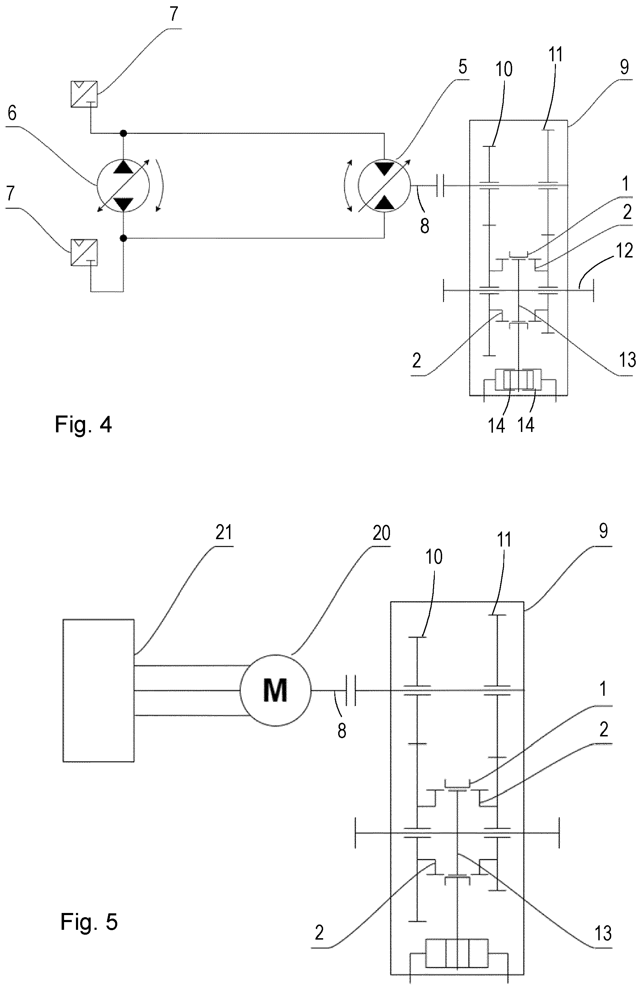

Fig. 4 zeigt ein Ausführungsbeispiel der Erfindung für einen hydrostatischen Fahrantrieb in einem Nutzfahrzeug.

Dazu ist ein hydrostatischer Antriebsmotor 5 vorgesehen, der durch eine hydraulische Fahrpumpe 6 in an sich bekannter Weise angetrieben wird. Zur Überwachung des an dem Antriebsmotor anliegenden Hydraulikdrucks sind Drucksensoren 7 vorgesehen, die auf beiden Druckseiten des Antriebsmotors angeordnet sind.

Die beiden Drucksensoren 7 können dabei insbesondere gewährleisten, dass der während eines Schaltvorgangs von der Fahrpumpe 6 erzeugte und am Antriebsmotor 5 anliegende Hydraulikdruck deutlich geringer ist, als er für einen regulären Fahrbetrieb erforderlich wäre. Während eines Fahrbetriebs kann das volle Drehmoment erzeugt werden, das von dem hydrostatischen Fahrantrieb bereitgestellt werden kann. Während des Umschaltens darf jedoch nur ein deutlich kleineres Drehmoment anliegen, um eine Schädigung der Zähne an der Schaltmuffe 1 und dem Kupplungskörper 2 zu verhindern. Die Drehmomentwerte während des Schaltvorgangs sollten z.B. weniger als 20% bzw. weniger als 10% der Werte des Fahrdrehmoments erreichen. Z.B. können die Drehmomentwerte in einem Bereich von 0,5% bis 5% des Fahrdrehmomentwertes liegen.

Durch Ändern von Ventilstellungen durch nicht dargestellte Hydraulikventile kann die Drehrichtung des Antriebsmotors geändert werden. Im Falle eines Schaltvorgangs können die Hydraulikventile relativ schnell hintereinander geschaltet werden, um kurzzeitige Drehrichtungsänderungen des Antriebsmotors 5 zu bewirken. Dadurch entstehen Druckpulsationen, die den Schaltvorgang unterstützen können.

Der Antriebsmotor 5 ist über eine Antriebswelle 8 mit einem Getriebe 9 verbunden. Im gezeigten Beispiel ist das Getriebe 9 zweistufig und weist eine erste Fahrstufe 10 und eine zweite Fahrstufe 11 mit jeweils gepaarten Zahnrädern auf, um das Drehmoment des Antriebsmotors 5 auf eine Abtriebswelle 12 zu übertragen. Die Abtriebswelle 12 kann z.B. mit Rädern des Nutzfahrzeugs verbunden sein.

Zum Umschalten der Fahrstufen 10, 11 (Gangstufen) ist eine axial verschiebbare Schaltmuffe 1 vorgesehen, die auf einer Führungsmuffe 13 axial verschiebbar ist. Die Führungsmuffe 13 ist mit der Abtriebswelle 12 formschlüssig in an sich bekannter Weise verbunden.

Die Schaltmuffe 1 weist - wie oben bereits mehrfach erläutert - eine Verzahnung am Umfang auf, z.B. eine Innenverzahnung, die über eine Außenverzahnung an dem Kupplungskörper 2 eines betreffenden Zahnrads einer der Fahrstufen 10 oder 11 geschoben werden kann. Dabei ergeben sich die Schaltsituationen, die bereits anhand der Fig. 1 bis 2 erläutert wurden.

Die Axialstellung der Schaltmuffe 1 kann mit Hilfe von zwei Stellgliedern 14 eingestellt werden.

Das Erzeugen der Stellkraft durch die Stellglieder 14 sowie das Umschalten der Drehrichtung des Antriebsmotors 5 durch Ansteuern der nicht dargestellten Hydraulikventile und Regeln des Hydraulikdrucks auf einen niedrigen Wert kann in Form einer Assistenzfunktion realisiert werden, die automatisch bei jedem Gangwechsel aktiv wird.

Insbesondere kann die Assistenzfunktion zunächst überwachen, ob der Gangwechsel einfach möglich ist, weil sich die Verzahnungen in der optimalen Position befinden (vgl. Fig. 1). Wenn jedoch festgestellt wird, dass ein direktes Schalten nicht möglich ist, weil die Zähne der Verzahnungen voreinander stehen (vgl. Fig. 2), kann die Assistenzfunktion die gewünschte Druckpulsation bzw. Drehrichtungsänderung herbeiführen, um den Schaltvorgang zu unterstützen.

Fig. 5 zeigt als Variante zu dem hydrostatischen Fahrantrieb von Fig. 4 einen nicht zur Erfindung gehörenden elektrischen Fahrantrieb.

Anstelle des hydrostatischen Antriebsmotors 5 von Fig. 4 ist ein elektrischer Antriebsmotor 20 vorgesehen, der durch eine geeignete Motorsteuerung 21, z.B. ein Umformer mit weiterer Steuerelektronik, angesteuert werden kann.

Der Antriebsmotor 20 treibt über die Antriebswelle 8 das Getriebe 9 an, das im Wesentlichen baugleich zu dem Getriebe 9 von Fig. 4 sein kann, so dass sich eine weitere Erläuterung erübrigt.

## Patentansprüche

1. Nutzfahrzeug, mit
- einem mechanischen Getriebe (9) mit wenigstens zwei Gangstufen;
- einem Antriebsmotor (5), der mit dem Getriebe (9) zum Übertragen eines Drehmoments von dem Antriebsmotor (5) zu dem Getriebe (9) gekoppelt ist;
- einer axial verschiebbaren Schaltmuffe (1), die angepasst ist zum Umschalten der Gänge zwischen zwei Gangstufen;
- einer Stellvorrichtung (14), die angepasst ist zum Erzeugen einer auf die Schaltmuffe (1) wirkenden Stellkraft zum axialen Verschieben der Schaltmuffe (1) und damit Umschalten der Gänge; und mit
- einer Steuervorrichtung, die angepasst ist zum Aktivieren der Stellvorrichtung (14) und damit Erzeugen der Stellkraft auf die Schaltmuffe (1) und parallel dazu zum Ansteuern des Antriebsmotors (5), derart, dass der Antriebsmotor (5) seine Drehrichtung wenigstens einmal ändert, während die Stellkraft auf die Schaltmuffe (1) wirkt;
**dadurch gekennzeichnet, dass**
- der Antriebsmotor (5) ein hydrostatischer Antriebsmotor ist; und dass
- schaltbare Hydraulikventile vorgesehen sind, die angepasst sind, um abwechselnd Hydraulikdruck auf Anschlüsse des hydrostatischen Antriebsmotors (5) zu geben, zum Bewirken einer wechselnden Druckpulsation am Antriebsmotor (5) und damit einer schnellen Drehrichtungsumkehr.

2. Nutzfahrzeug nach Anspruch 1, wobei
- die Schaltmuffe (1) eine Verzahnung aufweist;
- die durch die Schaltmuffe (1) schaltbaren Gangstufen jeweils eine der Verzahnung der Schaltmuffe (1) entsprechende Verzahnung aufweisen; und wobei
- die Schaltmuffe (1) in eine Schaltstellung mit einer Gangstufe verschiebbar ist, in der die Verzahnung der Schaltmuffe (1) und die Verzahnung der betreffenden Gangstufe ineinandergreifen und dadurch eine formschlüssige Verbindung bilden, über die ein Drehmomentfluss zwischen der Gangstufe und der Schaltmuffe (1) ermöglicht wird.

3. Nutzfahrzeug nach einem der vorstehenden Ansprüche, wobei
- eine Bedieneinrichtung vorgesehen ist, die angepasst ist zum Eingeben eines Schaltbefehls durch einen Bediener, wenn der Bediener ein Umschalten einer Gangstufe wünscht; und wobei
- bei Vorliegen des Schaltbefehls durch die Steuervorrichtung die Stellvorrichtung (14) aktiviert und die Drehrichtungsänderung des Antriebsmotors (5) bewirkt wird.

4. Nutzfahrzeug nach einem der vorstehenden Ansprüche, wobei
- eine Gangwechselüberwachungseinrichtung vorgesehen ist, die angepasst ist zum Überwachen eines erfolgreichen Gangwechsels und Erzeugen eines Kontrollsignals, wenn ein erfolgreicher Gangwechsel festgestellt wurde;
- die Steuervorrichtung angepasst ist, bei Vorliegen des Schaltbefehls zunächst nur die Stellvorrichtung zu aktivieren, nicht aber die Drehrichtungsänderung zu bewirken; und wobei
- die Steuervorrichtung angepasst ist, die Drehrichtungsänderung des Antriebsmotors (5) erst zu bewirken, wenn nach Ablauf einer vorgegebenen Zeitspanne nach Aktivieren der Stellvorrichtung kein Kontrollsignal vorliegt.

5. Nutzfahrzeug nach einem der vorstehenden Ansprüche, wobei
- das Nutzfahrzeug ausgebildet ist, um während eines Fahrbetriebs durch den Antriebsmotor (5) ein Fahr-Drehmoment zu erzeugen;
- das Nutzfahrzeug ausgebildet ist, um während des Aktivierens der Stellvorrichtung (14) und der Drehrichtungsänderung des Antriebsmotors (5) durch den Antriebsmotor (5) ein Schalt-Drehmoment zu erzeugen; und wobei
- das Schalt-Drehmoment kleiner ist als das Fahr-Drehmoment.

6. Nutzfahrzeug nach einem der vorstehenden Ansprüche, wobei eine Drehmomentbegrenzungseinrichtung vorgesehen ist, die angepasst ist zum Überwachen des Schalt-Drehmoments und Begrenzen des Schalt-Drehmoments.

7. Nutzfahrzeug nach Anspruch 6, wobei
- die Drehmomentbegrenzungseinrichtung eine Druckregeleinrichtung aufweist, die angepasst ist zum Regeln des an dem Antriebsmotor (5) anliegenden Hydraulikdrucks derart, dass das Schalt-Drehmoment einen Grenzwert nicht überschreitet.

8. Nutzfahrzeug nach Anspruch 7, wobei die Drehmomentbegrenzungseinrichtung wenigstens einen Drucksensor (7) aufweist, der angepasst ist zum Überwachen eines durch Schalten der Hydraulikventile an einer Druckseite des Antriebsmotors (5) anliegenden Hydraulikdrucks.

## Claims

1. Commercial vehicle, comprising
- a mechanical transmission (9) with at least two gear ratios;
- a drive motor (5) which is coupled to the transmission (9) in order to transmit a torque from the drive motor (5) to the transmission (9);
- an axially displaceable shift collar (1) which is adapted to shift the gears between two gear ratios;
- an actuating device (14) which is adapted to generate an actuating force, which acts upon the shift collar (1), in order to axially displace the shift collar (1) and thus shift the gears; and comprising
- a control device which is adapted to activate the actuating device (14) and thus generate the actuating force on the shift collar (1) and, in parallel therewith, to energise the drive motor (5) such that the drive motor (5) changes its direction of rotation at least once while the actuating force acts upon the shift collar (1);
**characterised in that**
- the drive motor (5) is a hydrostatic drive motor; and that
- switchable hydraulic valves are provided which are adapted to alternately provide hydraulic pressure to connections of the hydrostatic drive motor (5) in order to effect an alternating pressure pulsation at the drive motor (5) and thus a rapid reversal of the direction of rotation.

2. Commercial vehicle as claimed in claim 1, wherein
- the shift collar (1) has a toothing arrangement;
- the gear ratios which can be shifted by the shift collar (1) each have a toothing arrangement which corresponds to the toothing arrangement of the shift collar (1); and wherein
- the shift collar (1) can be displaced to a shift position with a gear ratio, in which the toothing arrangement of the shift collar (1) and the toothing arrangement of the respective gear ratio engage with one another and thereby form a form-fitting connection which permits a torque flow between the gear ratio and the shift collar (1).

3. Commercial vehicle as claimed in any one of the preceding claims, wherein
- an operating device is provided which is adapted to input a shift command by an operator when the operator wishes to shift a gear ratio; and wherein
- when the shift command is present, the control device activates the actuating device (14) and effects the change in the direction of rotation of the drive motor (5).

4. Commercial vehicle as claimed in any one of the preceding claims, wherein
- a gear change monitoring device is provided which is adapted to monitor a successful gear change and generate a control signal when a successful gear change has been established;
- when the shift command is present, the control device is adapted to initially activate only the actuating device but not to effect the change in the direction of rotation; and wherein
- the control device is adapted to effect the change in the direction of rotation of the drive motor (5) only when no control signal is present after a specified period of time has elapsed after activation of the actuating device.

5. Commercial vehicle as claimed in any one of the preceding claims, wherein
- the commercial vehicle is designed to generate a driving torque by means of the drive motor (5) during a driving operation;
- the commercial vehicle is designed to generate a shift torque by means of the drive motor (5) during the activation of the actuating device (14) and the change in the direction of rotation of the drive motor (5); and wherein
- the shift torque is smaller than the driving torque.

6. Commercial vehicle as claimed in any one of the preceding claims, wherein a torque limiting device is provided which is adapted to monitor the shift torque and to limit the shift torque.

7. Commercial vehicle as claimed in claim 6, wherein
- the torque limiting device has a pressure regulating device which is adapted to regulate the hydraulic pressure applied to the drive motor (5) such that the shift torque does not exceed a limit value.

8. Commercial vehicle as claimed in claim 7, wherein the torque limiting device has at least one pressure sensor (7) which is adapted to monitor a hydraulic pressure applied to a pressure side of the drive motor (5) by switching the hydraulic valves.
motor (5) by switching the hydraulic valves.

## Revendications

1. Véhicule utilitaire, avec
- une transmission mécanique (9) avec au moins deux rapports ;
- un moteur d'entraînement (5), qui est couplé à la transmission (9) pour transmettre un couple du moteur d'entraînement (5) à la transmission (9) ;
- un manchon de commutation (1) déplaçable axialement, qui est adapté pour changer les rapports entre deux rapports ;
- un dispositif d'actionnement (14), qui est adapté pour générer une force d'actionnement agissant sur le manchon de commutation (1) pour déplacer axialement le manchon de commutation (1) et ainsi changer les rapports ; et avec
- un dispositif de commande, qui est adapté pour activer le dispositif d'actionnement (14) et ainsi générer la force d'actionnement sur le manchon de commutation (1) et, parallèlement, pour commander le moteur d'entraînement (5), de telle sorte que le moteur d'entraînement (5) change au moins une fois de sens de rotation pendant que la force d'actionnement agit sur le manchon de commutation (1) ;
**caractérisé en ce que** :
- le moteur d'entraînement (5) est un moteur d'entraînement hydrostatique ; et
- des valves hydrauliques commutables sont prévues, qui sont adaptées pour appliquer alternativement une pression hydraulique aux raccords du moteur d'entraînement hydrostatique (5), afin de provoquer une pulsation de pression alternée au niveau du moteur d'entraînement (5) et ainsi une inversion rapide du sens de rotation.

2. Véhicule utilitaire selon la revendication 1, dans lequel :
- le manchon de commutation (1) présente une denture ;
- les rapports commutables par le manchon de commutation (1) présentent chacun une denture correspondant à la denture du manchon de commutation (1) ; et dans lequel
- le manchon de commutation (1) peut être déplacé dans une position de commutation avec un rapport, dans laquelle la denture du manchon de commutation (1) et la denture du rapport concerné s'engrènent et forment ainsi une connexion par engrènement, permettant un flux de couple entre le rapport et le manchon de commutation (1).

3. Véhicule utilitaire selon l'une des revendications précédentes, dans lequel :
- un dispositif de commande est prévu, qui est adapté pour la saisie d'une commande de changement de rapport par un opérateur, lorsque l'opérateur souhaite un changement de rapport ; et dans lequel
- en présence de la commande de changement de rapport, le dispositif d'actionnement (14) est activé et le changement de sens de rotation du moteur d'entraînement (5) est provoqué par le dispositif de commande.

4. Véhicule utilitaire selon l'une des revendications précédentes, dans lequel :
- un dispositif de surveillance de changement de rapport est prévu, qui est adapté pour surveiller un changement de rapport réussi et générer un signal de contrôle lorsqu'un changement de rapport réussi a été détecté ;
- le dispositif de commande est adapté, en présence de la commande de changement de rapport, à n'activer initialement que le dispositif d'actionnement, mais sans provoquer le changement de sens de rotation ; et dans lequel
- le dispositif de commande est adapté à ne provoquer le changement de sens de rotation du moteur d'entraînement (5) que si, après l'expiration d'une période de temps prédéfinie après l'activation du dispositif d'actionnement, aucun signal de contrôle n'est présent.

5. Véhicule utilitaire selon l'une des revendications précédentes, dans lequel :
- le véhicule utilitaire est configuré pour générer un couple de conduite par le moteur d'entraînement (5) pendant un fonctionnement de conduite ;
- le véhicule utilitaire est configuré pour générer un couple de commutation par le moteur d'entraînement (5) pendant l'activation du dispositif d'actionnement (14) et le changement de sens de rotation du moteur d'entraînement (5) ; et dans lequel
- le couple de commutation est inférieur au couple de conduite.

6. Véhicule utilitaire selon l'une des revendications précédentes, dans lequel un dispositif de limitation de couple est prévu, qui est adapté pour surveiller le couple de commutation et limiter le couple de commutation.

7. Véhicule utilitaire selon la revendication 6, dans lequel :
- le dispositif de limitation de couple comprend un dispositif de régulation de pression, qui est adapté pour réguler la pression hydraulique appliquée au moteur d'entraînement (5) de telle sorte que le couple de commutation ne dépasse pas une valeur limite.

8. Véhicule utilitaire selon la revendication 7, dans lequel le dispositif de limitation de couple comprend au moins un capteur de pression (7), qui est adapté pour surveiller une pression hydraulique appliquée à un côté pression du moteur d'entraînement (5) par la commutation des valves hydrauliques.
